(19) Europäisches Patentamt
European Patent Office
Office européen des brevets

(11) Publication number: 0 277 361
A1

(12) **EUROPEAN PATENT APPLICATION**

(21) Application number: 87119283.7

(51) Int. Cl.4: C08G 18/02 , C08L 33/02

(22) Date of filing: 29.12.87

(30) Priority: 30.12.86 US 947879

(43) Date of publication of application:
10.08.88 Bulletin 88/32

(84) Designated Contracting States:
AT BE DE ES FR GB IT NL SE

(71) Applicant: UNION CARBIDE CORPORATION
39 Old Ridgebury Road
Danbury Connecticut 06817(US)

(72) Inventor: Mallon, Charles Bernard
290 Shelburne Place
Belle Mead New Jersey 08502(US)

(74) Representative: Wuesthoff, Franz, Dr.-Ing. et al
Patentanwälte Wuesthoff-v. Pechmann
-Behrens-Goetz-v. Hellfeld Schweigerstrasse
2
D-8000 München 90(DE)

(54) **Surface-active polycarbodiimides.**

(57) A polycarbodiimide prepared by condensing isocyanates wherein at least one of the isocyanates is a monoisocyanate-containing reaction product of a polyisocyanate with a mono-alcohol or an alkoxy-capped, hydroxyl-containing poly(alkylene oxide) which is hydrophilic in nature. The polycarbodiimide is water-soluble or very readily emulsifiable in the presence of water, and is very effective as a cross-linking agent for carboxyl-containing, water-borne resins, e.g., latexes.

EP 0 277 361 A1

# SURFACE-ACTIVE POLYCARBODIIMIDES

## BACKGROUND OF THE INVENTION

### Field of the Invention

This invention relates to polycarbodiimide resins, and more specifically, to polycarbodiimide resins having a particular chemical structure which renders them "self-emulsifying" or soluble upon contact with water or an aqueous medium. Such materials are particularly useful as "low bake" cross linkers in waterborne, carboxyl-containing resin systems, preferably latex resins, aqueous polyurethane dispersions, or neutralized, carboxylated water-soluble resins, and carboxylated solution resins. The polycarbodiimides of this invention will also find utility in such cabroxyl-containing resin systems as polyesters, acrylics, epoxies, and alkyds. Accordingly, as used herein, the expression "carboxyl-containing" is intended to encompass all such resin systems, as well as others known to the art.

### Description of Prior Art

Carbodiimides are a well-known class of organic compounds. Dicyclohexylcarbodiimide has been useful for many years as a condensation agent in the preparation of peptides, as described by Sheelan and Hess (J. Chem. Soc., 77 1067 (1955)). Monodisperse, difunctional carbodiimide compounds have been prepared by the desulfurization of thioureas using hypochlorite. Such compounds were prepared, for example, by Iwakura, et al. (Makromol. Chem., 98, 21 (1966); Bull. Chem. Soc. Jpn., 40, 2383 (1967)). Multifunctional, linear, polydisperse polycarbodiimides have been prepared by Campbell from dicyanatoalkanes or dicyanatoarenes using a phospholene oxide catalyst (U.S. - A-2,941,966 ). Use of sodium hypochlorite to desulfurize thioureas to prepare multifunctional carbodiimides, .i.e., with more than two carbodiimide groups, is reported to be very difficult (Wagner, et al., Angew. Chem., 70, 819 (1981)). The art is summarized in Chem. Rev., 81, 589 (1981).

The use of polydisperse polycarbodiimides as cross-linkers for carboxylated latex resins and neutralized carboxylated water-soluble polymers is known in the art. Specifically, co-assigned U.S. application Serial No. 691,378, filed January 15, 1985 (the disclosure of which is incorporated herein), teaches the preparation of useful polycarbodiimide cross-linkers from certain mono-, di-, and tri-functional cycloaliphatic or saturated aliphatic isocyanates, in which the mono-and diisocyanates are optional, and co-assigned US-A-4,487,964 discloses the preparation of useful polycarbodiimide cross-linkers from mixed aromatic/aliphatic isocyanates. Co-pending, co-assigned U.S. application Serial No. 747,190, filed June 21, 1985, discloses monodisperse (i.e., having no molecular weight distribution), branched tri-and higher multifunctional polycarbodiimides. These compounds are effective as cross-linking agents, and also provide exact functionality, i.e., a pre-designed, branched structure with a known degree of functionality and a single molecular weight.

While the polycarbodiimides described above represent significant advances over the art and are useful for many purposes, experience in the field has indicated that various problems remain. For example, the product of above-mentioned Serial No. 691,378 has the following deficiencies: low temperature reactivity inferior to that of the aziridines, the principal competitive cross-linker; the need to pre-emulsify the product before adding it to water borne formulations; an apparent incompatability with certain polymers, evidenced as a slight to moderate haze and gloss reduction in clear films. Even in combination with water-borne urethanes, the one class of polymers where reactivity does not seem to be a significant problem, the need to emulsify the product is a serious drawback. Incompatability with certain specific polyurethanes is also evident.

Moreover, the product of above-mentioned Serial No. 747,190 is produced by a relatively complex procedure which presents significant difficulties on a commercial scale, and the raw materials required are not as yet readily available in commercial quantities.

In co-pending, co-assigned U.S. application Serial No. 845,982, filed March 31, 1986 * , there are disclosed surface active polycarbodiimides obtained by incorporating surfactant moieties into polycar-

* EP 0 241805 A2

bodiimide structures. The present invention relates to a similar technique, but comprises an improvement directed more particularly to the product of Serial No. 691,378. In addition, the present invention provides a polycarbodiimide that is produced by a simple process utilizing commonly available raw materials. The present invention is also particularly advantageous in that it provides a polycarbodiimide resin which is "self-emulsifying" or soluble in the presence of water, i.e., is much easier to put into a water-borne system, and that is a much more reactive crosslinker than the product of Serial No. 691,378 when used in water-borne systems. This is achieved, at least in part, by utilizing a significantly greater level of surface-active moieties than is disclosed by Serial No. 691,378.

## SUMMARY OF THE INVENTION

According to the present invention there is provided a water-soluble or self-emulsifying polycarbodiimide having a structure conforming to that of the reaction product of:

cycloaliphatic or saturated aliphatic mono-,di-, and triisocyanates wherein the cycloaliphatic moieties preferably contain from 5 to 7 carbons and can be substituted with alkyl having 1 to 6 carbons, and oxygen and the saturated aliphatic moieties preferably contain from 1 to 18 carbons and wherein the triisocyanates are optional, and:

wherein 10 to 100 mole percent of the total monoisocyanate comprises an adduct of:

(i) a cycloaliphatic or saturated aliphatic di-or triisocyanate wherein the cycloaliphatic moieties contain from 5 to 7 carbons and can be substituted with alkyl having 1 to 6 carbons, and oxygen and the saturated aliphatic moieties contain from 1 to 18 carbons and wherein the triisocyanates are opticnal, and

(ii) an alkoxy capped poly(alkylene oxide) having at least one reactive hydroxyl group, in such a ratio that at least one unreacted isocyanate group remains per molecule, on average, and

an effective amount of a catalyst for the conversion of isocyanates to carbodiimides.

There is also provided a method for crosslinking water-borne, carboxyl-containing resins or neutralized carboxylated water-soluble organic resins which comprises:

(a) blending said resins at ambient temperatures with 0.5 to 30 parts per 100 parts by weight of said resins of the emulsified or water-soluble polyfunctional polycarbodiimide described above, and

(b) allowing volatilization of certain formulated materials, resulting in a crosslinked product.

In addition, there are provided an aqueous emulsion or solution of the above-described polycarbodiimide, and a cross-linkable composition comprising a mixture of a carboxyl-containing emulsion resin or neutralized, carboxylated water-soluble organic resin and the above-described polycarbodiimide.

The resin systems in which carbodiimide cross-linkers are particularly useful are those in which the material contains reactive carboxyl groups, such as are typically found in aqueous latexes used for coatings. In the past, in order to prepare the cross-linking carbodiimide in compatible emulsion form, it has been necessary to subject the carbodiimide to high-energy shear forces in the presence of relatively high concentrations of surfactants. Usually, this has required the employment of special, high-shear mixing equipment, and has exacted the further penalty of high energy costs. Since such emulsions are often difficult to keep stabilized during storage and have limited useful lifetimes due to hydrolysis, it has often been necessary to avoid storage and shipment of the carbodiimide emulsion and, instead, to suffer the additional inconvenience of having to add emulsification equipment to the coating line.

The present invention effectively solves many of those problems of the prior art by providing polycarbodiimides which are virtually self-emulsifying or water-soluble. They are readily compatible with commercial, carboxyl-containing, water-borne polymers, and are quite stable.

The present invention is a surface-active polycarbodiimide of the generic formula

$R_1$-[NCN - $R_2$]$_x$ -NCN - $R_3$ (I)

wherein $R_2$ is the residue of a difunctional isocyanate, OCN - $R_2$ -NCO; $R_1$ and $R_3$ can be either alkyl of one to about 10, preferably 3-6, carbon atoms or the residue of the reaction of a monoalkyl-capped alkylene oxide polymer, $R_4(OCH_2CHR_5)_nOH$, with a diisocyanate, $R_4(OCH_2CHR_5)_n$-O-CO-N-$R_6$-NCO, wherein $R_4$ = 1-6 carbon alkyl, $R_6$ = H or $CH_3$, $R_6$ = $R_2$ or a residue of another difunctional isocyanate, n = 0 to about 20 (preferably 6 to about 20), and x = 1 to about 20, on average (preferably 2 to about 5). It is most preferred that $R_4$ = $CH_3$.

In addition, this invention provides methods for making the surface-active polycarbodiimide of formula I, for making the cross-linker and cross-linkable emulsions, and for cross-linking such emulsions by allowing

volatilization of certain materials, to produce a cross-linked product.

As used herein, all defined groups are intended to include such groups containing any substitution which does not significantly interfere with the use of the carbodiimides for their intended purpose.

## DETAILED DESCRIPTION OF THE INVENTION

Incorporation of a carbodiimide cross-linker into formulations containing carboxylic, water-borne polymers requires either that the cross-linker be emulsified mechanically, or made water-soluble or surface-active for easy dispersion. The emulsification step of the prior art is cumbersome, and emulsified carbodiimides are subject to a slow, unpreventable reaction with water to form ureas, which limits their shelf-life. The present invention permits substantial simplification or elimination of the mechanical emulsification step. This is achieved by use of a chemically modified carbodiimide which is a surface-active or water-soluble species.

The surface-active carbodiimide of this invention can be prepared and used as a surfactant by adding it, with agitation, to solutions of polycarbodiimides, as with surfactants of the prior art. It is a surprising advantage of this invention that it permits the preparation of polycarbodiimides that are more reactive toward carboxyl-functional polymers than the externally emulsified products of similar composition. It is to be understood that mixtures of polycarbodiimides can also be readily emulsified using this invention. If the surface-active carbodiimide is prepared in situ in a mixture of isocyanates, it will be understood that surface-active species will be formed from each of the polycarbodiimide structures present, according to the reaction kinetics of each species.

The polycarbodiimides of this invention are prepared by reaction of mono-, di-, and triisocyanates, with the triisocyanates optional. It is a key feature of this invention that at least one of the monoisocyanates to be used is formed by the reaction of a diisocyanate and/or optionally a triisocyanate with a hydrophilic monoalcohol, as described above. The total monoisocyanate to diisocyanate or triisocyanate molar ratio should be 2:1 to 2:10 to yield the carbodiimide with evolution of carbon dioxide by the following general equation:

$$2\ R\text{-}NCO \rightarrow R\text{-}NCN\text{-}R + CO_2$$

This process usually requires a catalyst, and a preferred catalyst is known as "MPPO," which is 3-methyl-1-phenyl-2-phospholene-1-oxide, having the formula:

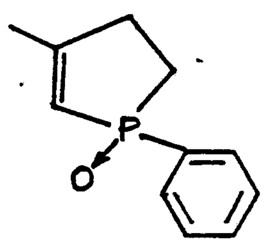

It is not necessary to use a triisocyanate. A combination of mono-and diisocyanates in a molar ratio of 2:2 to 2:4 is preferred.

The reaction is accomplished in aprotic, i.e., non-reactive solvents, such as, aromatic hydrocarbons having 6 to 12 carbons, aliphatic esters or glycol diesters, e.g., glycol ether esters, amyl acetate, glycolether diacetate, dipropylene glycol ether dibutyrate and hexylene glycol diacetate having about 8 to 20 carbons. The reaction mixture is stirred vigorously, and a small amount of nitrogen is sparged in to assist in driving the reaction to completion by removal of carbon dioxide. Generally, mixtures of isocyanates are employed with the relative molar proportions of mono-, di-, and tri-isocyanates adjusted to yield the desired product. Isocyanates which may be employed include butyl isocyanate, isophorone diisocyanate, hexamethylene diisocyanate, trimethylene diisocyanate, and bisisocyanatocyclohexyl methane.

In a typical preparation, the adduct is formed in situ. A diisocyanate (preferably isophorone diisocyanate) and a monohydroxyl-containing poly(alkylene oxide) are charged to a round-bottom flask containing an aprotic solvent (preferably PM acetate). The flask is equipped with a stirrer, heater, condenser, and nitrogen inlet. The quantity of solvent used is not critical, but should be sufficient to keep the product desirably fluid. As a guideline, it is recommended that sufficient solvent be used to produce about a 50% active product. The choice of solvent is not critical; however, the boiling point of the solvent should be at least about 145°C, unless the reaction is run under pressure.

It is also possible to use, in lieu of some of the poly(alkylene oxide), a mono-alcohol, such as butanol; however, the content of such mono-alcohol must be controlled such that hydrophilicity is not significantly impaired.

The reactants are heated with stirring, under nitrogen, to about 100°C and held for 1-2 hours. At this point, the non-adduct monoisocyanate (preferably butyl isocyanate) and the catalyst (preferably MPPO) are added, and the flask is heated to 140-145°C. The reaction mixture is held at this temperature until either the isocyanate concentration reaches a low, steady level, or disappears, as determined by IR analysis of samples taken from the reaction mixture. Typically, 16-24 hours are required from the time 140°C is reached for the reaction to be completed. Any residual isocyanate will be scavenged by carbodiimide within 1-2 days at room temperature.

While the saturated aliphatic isocyanates previously listed include the more widely available commercial materials, many others can be used, as exemplified by:

1,4-tetramethylene diisocyanate
1,12-dodecane diisocyanate
cyclobutane-1,3-diisocyanate
cyclohexane-1,3-diisocyanate
cyclohexane-1,4-diisocyanate
hexahydrotolylene-2,4-and -2,6-diisocyanate

While the solvents previously listed are currently preferred, many other solvents would be suitable. Requirements for suitable solvents include having a sufficiently high boiling point to allow efficient accomplishment of the desired reaction and that the solvent not contain active hydrogen functionally such as would react with the isocyanate starting material or the carbodiimide product. Exemplary solvents include: ethylbutylketone, acetophenone, propiophenone, dissobutylketone, cyclohexanone, N-methyl pyrrolidone, decalin, methyl CELLOSOLVE acetate, CELLOSOLVE acetate, butyl CELLOSOLVE acetate, CARBITOL acetate, butyl CARBITOL acetate, and glycoldiacetate.

Many variations of the catalyst are employable. Examples include the nonoxidized phospholene compound as well as the phospholene sulfide. Additional alternatives include substitutions on and for the phenyl group attached to the phosphorous atom such as by the ethyl moiety. Additional substitutions on the cyclic phosphorous ring can be made, as for example, hydrogen, alkenyl, aryl, aralkyl, alkoxy, chlorine, and bromine.

The process need not be operated at 140°C for acceptable product has been produced at 130°C to 160°C. Operation below 120°C may yield unacceptably long cycle times while operation of 160°C or above may yield undesired quantities of by-product.

It is a unique feature of the present invention that 10 to 100 weight percent, preferably 10 to 50 weight percent, of the total isocyanates comprises a particular adduct. Most preferably, 15 to 40 weight percent of the total isocyanates comprises the adduct. This adduct is a reaction product of (i) a cycloaliphatic or saturated aliphatic diisocyanate, preferably, wherein the cycloaliphatic moieties contain from 5 to 7 carbons and can be substituted with alkyl having 1 to 6 carbons, and oxygen and the saturated aliphatic moieties contain from 1 to 18 carbons and (ii) an equimolar quantity of a mono-alcohol, preferably an alkoxy-capped poly(alkylene oxide) having one reactive hydroxyl group. If desired, the mono-alcohol can also be, in part, an alkyl alcohol such as butanol. Preferred isocyanates are isopheronediisocyanate and hexamethylene diisocyanate.

To form the adduct, an excess of the above-described isocyanates is reacted with an alkoxy-capped poly(alkylene oxide) such that the adduct retains an unreacted isocyanate. Since the adduct itself is to function as a monoisocyanate in the further reaction to produce the self-emulsifying polycarbodiimide, the concentrations of reactants used to produce the adduct must be properly balanced to provide residual monoisocyanate functionality.

The alkoxy-capped poly(alkylene oxide) is an alkoxy-started polymer of an alkylene oxide, preferably ethylene oxide, or mixture of alkylene oxides, e.g., a mixture of ethylene and propylene oxides. Such polymers and capped polymers are well known in the art and can be readily prepared using familiar procedures. Useful polymers of this type are described by the generic formula:

$R-(OCH_2CH_2)_n-OH$, wherein R is $C_1$-$C_6$, preferably $C_1$-$C_4$ alkyl, and n is 4 to 20, preferably 8 to 17; the degree of alkoxylation should be as close to 100 mole percent as possible. As a convenient alternative to manufacturing the capped polymer, various commercially available materials may be employed. For example, one may advantageously use those methoxy-capped poly(ethylene oxide) resins available from Union Carbide Corp. under the trade designation "CARBOWAX MPEG." Such materials are available in a broad range of molecular weights. For purposes of this invention, the preferred molecular weight (weight average) range is 300 to 1,000, preferably 350 to 750. It is to be recognized that to be effective for

purposes of this invention, the alkoxy-capped poly(alkylene oxide) must be hydrophilic in nature. Accordingly, if non-water-soluble alkylene oxide copolymers are used, e.g., copolymers of ethylene oxide and propylene oxide, care must be taken to select copolymers which contain sufficient ethylene oxide to confer the necessary hydrophilicity.

As previously indicated, the surface-active or water-soluble carbodiimide of formula (I) can be effectively used in a variety of ways. It can be added to a hydrophobic carbodiimide, preferably in organic solvent solution, to form a surface-active mixture, which can then be added to a cross-linkable, water-borne polymer. The surface-active carbodiimide can alternatively be formed in situ right in the hydrophobic carbodiimide solution itself. The surface-active carbodiimide also can be added to a mixture of water-borne polymer and hydrophobic carbodiimide.

It is also possible to utilize the surface-active carbodiimide of this invention in combination with other surfactants known to the art. If such supplemental surfactants are used, it is preferred that they be of the same ionic charge as any surfactants already present in the system (e.g., a latex) to which the surface-active carbodiimide is to be added, in order to minimize possible compatibility problems. However, the combination of the nonionic surface-active carbodiimide of this invention with ionic types is also useful. Such combination might be desirable when, for instance, emulsifying a polydisperse polycarbodiimide or a mixture of carbodiimides containing a polydisperse type. If a supplemental surfactant is used, it is preferable that it be of the anionic type, but should not, of course, contain chemical moieties which are reactive with carbodiimide functionality. Thus, surfactants containing reactive carboxyl groups, e.g., those based upon stearic or oleic acids, should be avoided. Preferred are those surfactants based upon sulfonic salts or upon sulfates. It will be understood that any ionic supplemental surfactant used must be selected to be compatible with any surfactant already present in the carboxyl-containing material to be cross-linked. For example, many latexes contain cationic surfactant residues, so should not be used with anionic supplemental surfactants.

Solvents for the surface-active carbodiimide include liquid compounds, or their combinations, which contain ester, ether, or ketone functionality. Examples of such solvents include UCAR PM acetate, ethyl acetate, isopropyl acetate, butyl acetate. amyl acetate, butyl phthalate, methyl CELLOSOLVE Acetate, CELLOSOLVE Acetate, Butyl CELLOSOLVE Acetate, CELLOSOLVE Acetate, Butyl CELLOSOLVE Acetate, CARBITOL Acetate, Butyl CARBITOL Acetate, glyceryl triacetate, hexylene glycol diacetate, methyl ethyl ketone, diethyl ketone, methyl isobutyl ketone, ethyl butyl ketone, acetophenone, diisobutyl ketone, isophorone, cyclohexanone, isopropanol, isobutanol, 1-pentanol, 2-methyl pentanol, Methyl CELLOSOLVE, Butyl CELLOSOLVE, Hexyl CELLOSOLVE, Methyl CARBITOL, Propasol B, Propasol BEP, Propasol M, and phenyl glycol ether.

## EXAMPLES

The examples which follow illustrate, but are in no way intended to limit, the invention.

The following terms are used in the examples:

CARBOWAX
Trademark of Union Carbide Corporation for hydroxy-terminated poly(ethylene glycols)

MPEG
Abbreviation for methoxy-terminated poly(ethylene glycol)

UCAR
Trademark of Union Carbide Corporation for carboxylated emulsion polymers

Leneta Paper
A commonly used, heavy-gauge paper to which test coatings are applied. Made by Leneta Paper Company

Double-Rub Test
Essentially, a piece of cheesecloth is saturated with methyl ethyl ketone, then rubbed on the substrate until the coating is penetrated. One back-and-forth rub is a double-rub.

PHR
Parts of dry cross-linker resin used in an aqueous formulation per 100 parts of dry polymer resin.

In the following examples, all parts and percentages are by weight unless otherwise specified.

As described above, adduct of this invention is formed, in a preferred embodiment, from the reaction of isopherone diisocyanate and a methoxy-capped-poly(ethylene oxide). The resulting adduct has the following idealized structure:

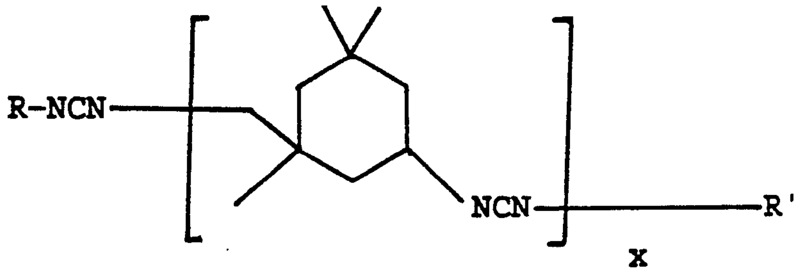

wherein x = 3, R and R′ can be the same or different and can be n-butyl or

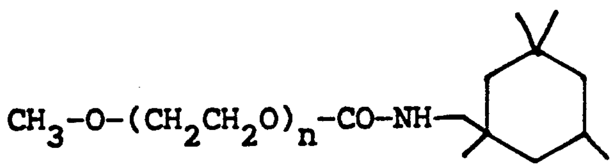

and n will vary, depending upon the "MPEG" used. MPEGs are classified in their trade designation by their nominal average molecular weight, e.g., 350, 550, 750, so n will be whatever number of ethylene oxide units, on average, are found in that particular MPEG resin.

A wide variety of resin structures is clearly possible and these can be categorized by defining three variables: which MPEG is used; the mole ratio of butyl end groups to MPEG end groups; and the value of x, the number of moles of diisocyanate per 2 moles of monoisocyanate (chain terminators used in the synthesis). The value x is, therefore, a relative indicator of the molecular weight of the product and of the idealized average number of carbodiimides per cross-linker molecule.

TABLE I

POLYCARBODIIMIDE WITH x = 3

| Example | MPEG Used | BuNCO:MPEG (mole ratio) | Carbodiimide Equivalent Weight(1) |
|---|---|---|---|
| 1 | 750 | 6.2 | 233 |
| 2 | 350 | 6.2 | 207 |
| 3 | 350 | 2.1 | 249 |
| 4 | 350 | 1.2 | 289 |
| 5 | 550 | 6.2 | 217 |
| 6 | 550 | 2.2 | 276 |
| 7 | 750 | 2.2 | 305 |
| 8 | 550 | 1.0 | 370 |
| 9 | 750 | 10.5 | 220 |
| 10 | 750 | 4.2 | 255 |
| 11 | 750 | 5.0 | 243 |
| 12 | 750 | 6.1 | 230 |

(1) Calculated, based on solids.

The reactants used in each of these preparations are listed in Table II:

TABLE II

REACTANTS (GRAMS) FOR POLYCARBODIIMIDES WITH x = 3

| Example | IPDI | BuNCO | MPEG | Catalyst (MPPO) (10% Solution) |
|---|---|---|---|---|
| 1 | 35 | 7.9 | 10 | 4.7 |
| 2 | 35 | 8 | 5 | 4.7 |
| 3 | 35 | 6 | 10 | 4.7 |
| 4 | 35 | 5 | 15 | 4.7 |
| 5 | 35 | 8 | 7 | 4.7 |
| 6 | 35 | 6 | 15 | 4.7 |
| 7 | 35 | 6 | 20 | 4.7 |
| 8 | 35 | 4 | 25 | 4.7 |
| 9 | 34.3 | 8 | 8 | 4.7 |
| 10 | 35 | 7.5 | 13.5 | 4.7 |
| 11 | 35 | 7.7 | 11.6 | 4.7 |
| 12 | 35 | 7.9 | 10 | 4.7 |

Samples were also prepared where X deviated from the theoretical value of 3. Those products are listed in Table III. Reactants used to prepare them are in Table IV.

## TABLE III

## POLYCARBODIIMIDES WITH x ≠ 3

| Example | MPEG Used | BuNCO:MPEG (mole ratio) | x | Carbodiimide Equivalent Weight |
|---|---|---|---|---|
| 13 | 750 | 2.2 | 1.3 | 399 |
| 14 | 750 | 2.3 | 8 | 234 |
| 15 | 750 | 2.3 | 8 | 234 |
| 16 (1) | 750 | 2.5 | 18 | 201 |
| 17 | 750 | 6.2 | 1.3 | 278 |
| 18 | 750 | 6.2 | 8 | 203 |
| 19 | 750 | -(2) | 1 | 542 |

(1) Sample gelled during preparation.

(2) Sample prepared with butanol in place of butyl isocyanate. See Table IV for comparison.

## TABLE IV

## REACTANTS (GRAMS) FOR POLYCARBODIIMIDES WITH x ≠ 3

| Example | IPDI | BuNCO | MPEG | Catalyst (MPPO) (10% Solution) |
|---|---|---|---|---|
| 13 | 28.4 | 8.9 | 31.0 | 4.7 |
| 14 | 41.7 | 3.0 | 9.8 | 4.7 |
| 15 | 41.7 | 3.0 | 9.8 | 4.7 |
| 16 | 45 | 1.5 | 4.5 | 4.7 |
| 17 | 26 | 11.9 | 14.6 | 7.1 |
| 18 | 41.7 | 4.0 | 4.9 | 2.4 |
| 19 | 35 | (1) | 20 | 4.7 |

(1) Sample prepared with 6g n-butanol, no butyl isocyanate.

Polycarbodiimides produced in the preceding examples were evaluated using the following general procedure. A master batch of carboxyl-containing latex was prepared according to the following recipe:

| | |
|---|---|
| UCAR 4620 or 4431 | 100g |
| Dimethyl ethanolamine | to pH 8.2-8.8 |
| Butyl CELLOSOLVE (coalescing aid) | 8g |
| Water | 8g |

UCAR 4620 is a latex of a styrene-acrylic polymer with carboxyl functionality, Tg = 16°C, total solids = 45% pH = 7-8. UCAR 4431 is a similar material but Tg = 41°C, total solids = 41%, pH = 7.5 - 8.5.

The polycarbodiimides were evaluated as cross-linkers by adding them, as prepared, to the master batch. Cross-linker was added and mixed with a magnetic stirrer for 30 minutes to 2 hours. Drawdowns were then made on Leneta Charts at about 1 mil dry film thickness. The coatings were cured under the conditions shown in Tables V to VIII and evaluated for 60° Gloss as an indication of compatibility and for MEG double rubs resistance as an indication of degree of cross-linking. Results for uncross-linked latexes and for UCARLNK XL-20E cross-linked films are also shown for comparison. In the column headings, the number after the slash is the number of minutes at the cure temperature shown in front of the slash.

## TABLE V

## PERFORMANCE OF CROSS-LINKERS (5 PHR) WITH x = 3 IN UCAR LATEX 4620

| | | MEK Double - Rubs after Cure | | | | |
|---|---|---|---|---|---|---|
| Cross-Linker | 60° Gloss | Ambient, 1 Day | 60°C 30/Min. | 85°C/5 | 85°C/30 | 100°C/5 |
| None | 88% | 20 | 20 | 20 | 20 | 20 |
| UCARLNK XL-20E(1) | 84 | 20 | 30 | 25 | 85 | 50 |
| Ex. 1 | 86 | 110 | - | - | 300+ | - |
| Ex. 2 | 73 | 62 | - | - | 100 | - |
| Ex. 3 | 84 | 54 | - | - | 270 | - |
| Ex. 4 | 86 | 100 | - | - | 300+ | - |
| Ex. 5 | 86 | 220 | 170 | 221 | 300+ | 220 |
| Ex. 6 | 86 | 200 | 225 | 157 | 300+ | 300+ |
| Ex. 7 | 86 | 85 | - | - | 300+ | - |
| Ex. 12 | 84 | 25 | 25 | 25 | 300+ | 20 |

(1) A polycarbodiimide made according to U.S. Serial No. 691,378 and available from Union Carbide Corp., about 46-50% active, in PM acetate, equivalent weight = 175 (solids basis).

## TABLE VI

## PERFORMANCE OF CROSS-LINKERS (5 PHR) WITH x = 3 IN UCAR LATEX 4431

| | | MEK Double - Rubs after Cure | | | | |
|---|---|---|---|---|---|---|
| Cross-Linker | 60° Gloss | Ambient, 1 Day | 60°C/30 Min. | 85°C/5 | 85°C/30 | 100°C/5 |
| None | 88 | 20 | 20 | 20 | 20 | 20 |
| UCARLNK XL-20E | 88 | 50 | 90 | 85 | 120 | 78 |
| Ex. 1 | 90 | 300+ | - | - | 300+ | - |
| Ex. 8 | 88 | 130 | 280 | 260 | 300+ | 300+ |
| Ex. 12 | 87 | 175 | 290 | 300+ | 300+ | 300+ |
| Ex. 2 | 23 | 62 | - | - | 100 | - |
| Ex. 3 | 84 | 54 | - | - | 270 | - |
| Ex. 4 | 86 | 100 | - | - | 300+ | - |
| Ex. 5 | 86 | 75 | - | - | 150 | - |
| Ex. 6 | 86 | 84 | - | - | 300+ | - |
| Ex. 7 | 86 | 85 | - | - | 300+ | - |

## TABLE VII

## PERFORMANCE OF CROSS-LINKERS (5 PHR) WITH $x \neq 3$ IN UCAR LATEX 4620

| | | MEK Double - Rubs after Cure | | | | |
|---|---|---|---|---|---|---|
| Cross-Linker | 60° Gloss | Ambient, 1 Day | 60°C/30 Min. | 85°C/5 | 85°C/30 | 100°C/5 |
| None | 86 | 20 | 20 | 20 | 20 | 20 |
| UCARLNK XL-20E | 84 | 20 | 30 | 25 | 85 | 50 |
| Ex. 13 | 84 | 30 | 70 | 70 | 140 | 50 |
| Ex. 14 | 84 | 50 | 80 | 150 | 300+ | 60 |
| Ex. 15 | 84 | 20 | 30 | 20 | 200 | 80 |
| Ex. 17 | 84 | 50 | 40 | 25 | 80 | 125 |
| Ex. 18 | 60 | 20 | 30 | 20 | 40 | 60 |
| Ex. 19 | - | 38 | 34 | 90 | 300+ | 20 |

## TABLE VIII

## PERFORMANCE OF CROSS-LINKERS (5 PHR) WITH $x \neq 3$ IN UCAR LATEX 4431

| | | MEK Double - Rubs after Cure | | | | |
|---|---|---|---|---|---|---|
| Cross-Linker | 60° Gloss | Ambient, 1 Day | 60°C/30 Min. | 85°C/5 | 85°C/30 | 100°C/5 |
| None | 88 | 20 | 20 | 20 | 20 | 20 |
| UCARLNK XL-20E | 88 | 50 | 90 | 85 | 120 | 78 |
| Ex. 13 | 88 | 215 | 115 | 280 | 300+ | 45 |
| Ex. 14 | 88 | 180 | 300+ | 300+ | 300+ | 140 |
| Ex. 15 | 88 | 190 | 300+ | 300+ | 300+ | 300+ |
| Ex. 17 | 89 | 150 | 280 | 300+ | 300+ | 300+ |
| Ex. 18 | 76 | 50 | 50 | 40 | 270 | 100 |
| Ex. 19 | - | 300+ | 300+ | 300+ | 300+ | 230 |

The performance data in Tables V-VIII indicate that the cross-linkers of the examples of this invention

are superior to the controls, as judged by MEK-resistance data, and have excellent compatibility, even though not emulsified, as judged by gloss measurements. The specific value of x appears to have minimal effect on performance. It should be high enough so that most molecules are polyfunctional and should be low enough to prevent gelation.

## Claims

1. A process for producing surface-active polycarbodiimide by reacting cycloaliphatic or saturated aliphatic mono-, di-and triisocyanates wherein the cycloaliphatic moieties contain from 5 to 7 carbons and can be substituted with alkyl having 1 to 6 carbons, and oxygen and the saturated aliphatic moieties contain from 1 to 18 carbons and wherein the triisocyanates are optional, and wherein 10 to 100 weight percent of the total monoisocyanate, comprises an adduct of:

(i) a cycloaliphatic or saturated aliphatic di-or triisocyanates wherein the triisocyanates are optional, and

(ii) an alkoxy-capped poly(alkylene oxide) having at least one reactive hydroxyl group,

in such a ratio that at least one unreacted isocyanate group remains per molecule, on average, and a catalyst for the conversion of isocyanates to carbodiimides.

2. The process of claim 1 for producing polycarbodiimides having a molecular weight of 1,000 to 10,000 or 1,500 to 4,000.

3. The process of claim 1 or 2 wherein the adduct comprises 10 to 50 or 15 to 40 weight percent of the total isocyanate.

4. The process of claims 1 to 3 wherein the adduct comprises a reaction product of a cycloaliphatic diisocyanate and an alkoxy-capped poly(alkylene oxide), the alkoxy-capped poly(alkylene oxide) having a molecular weight of 300 to 1,000 or 350 to 750.

5. The process of claim 4 wherein the cycloaliphatic diisocyanate is isophorone diisocyanate.

6. The process of claim 5 wherein the poly(alkylene oxide) is methoxy-capped.

7. The process of claims 1 to 3 wherein the adduct comprises a reaction product of a saturated aliphatic diisocyanate and an alkoxy-capped poly(alkylene oxide), the alkoxy-capped poly(alkylene oxide) having a molecular weight of 300 to 1,000 or 350 to 750.

8. The process of claim 7 wherein the saturated aliphatic diisocyanate is hexamethylene diisocyanate.

9. The process of claim 8 wherein the poly(alkylene oxide) is methoxy-capped.

10. The process of claims 1 to 9 wherein the non-adduct monoisocyanate is selected from butyl isocyanate, propyl isocyanate, and cyclohexyl isocyanate.

11. The process of claims 1 to 10 wherein a mono-alcohol is mixed with the poly(alkylene oxide).

12. The process of claim 11 wherein the mono-alcohol is butanol.

13. Method for crosslinking carboxyl-containing resins or neutralized carboxylated water-soluble organic resins which comprises:

(a) blending the resins at ambient temperatures with 0,5 to 30 parts per 100 parts by weight of the resins of an emulsified or water-soluble polyfunctional polycarbodiimide obtained according to claims 1 to 12, and

(b) allowing volatilization of certain formulated materials.

14. Method of claim 13 wherein the carboxyl-containing resin contains acrylic or methacrylic acid or maleic or fumaric or itaconic acid copolymerized therein.

European Patent Office

# EUROPEAN SEARCH REPORT

Application Number

EP 87 11 9283

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X<br>P | EP-A-0 241 805 (UNION CARBIDE)<br>* page 3, lines 19-24; page 5, line 46; examples 1, 8-11; claims 1, 2, 6, 12 *<br>--- | 1-10,13<br>,14 | C 08 G 18/02<br>C 08 L 33/02<br>C 08 G 18/10<br>C 08 G 65/32 |
| D,A | US-A-4 487 964 (WATSON et al.)<br>* column 1, lines 6-40; examples 3-7, 11-13; claim 1 *<br>--- | 1,13,14 | |
| A | US-A-4 587 301 (WATSON et al.)<br>* claim 1 *<br>--- | 1,13,14 | |
| A | DE-A-2 602 413 (BAYER)<br>* claims 1, 2 *<br>--- | 1 | |
| A | ANGEWANDTE CHEMIE, no. 93, 1981, pages 855-866, Weinheim; K. WAGNER et al.: "alpha,omega-dissocyanato-carodiimide und-polycarbodiimide sowie ihre Derivate"<br>* page 851, column 2, page 859, columns 1, 2, paragraph 1 *<br>----- | 1 | |
| | | | TECHNICAL FIELDS SEARCHED (Int. Cl.4) |
| | | | C 08 G 18/00<br>C 08 G 65/00 |

The present search report has been drawn up for all claims

| Place of search | Date of completion of the search | Examiner |
|---|---|---|
| BERLIN | 17-05-1988 | HOEPFNER W.W.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)